# EUROPÄISCHE PATENTANMELDUNG

(11) **EP 0 877 000 A2**
(43) Veröffentlichungstag der Anmeldung: **11.11.1998**
(21) Anmeldenummer: 98108019.5
(22) Anmeldetag: 02.05.1998
(51) Int. Cl.: C02F 3/06, C02F 3/20

(54) **Abwasserzuführ/verteileinrichtung für eine Abwasserreinigungskammer einer Kläranlage**

(30) Priorität: 05.05.1997 DE 19718907
(71) Anmelder: RHEBAU Rheinische Beton- und Bauindustrie GmbH & Co., 41541 Dormagen (DE)
(72) Erfinder: Gester, Thomas, 41564 Kaarst (DE); Galle, Michael, 41836 Hückelhoven (DE); Marggraff, Martin, 52072 Aachen (DE)
(74) Vertreter: Döring, Wolfgang, Dr.-Ing. Patentanwälte Hauck, Graalfs, Wehnert, Döring, Siemons

(57) **Zusammenfassung**

Es wird eine Abwasserzuführ/verteileinrichtung für eine Abwasserreinigungskammer einer Kläranlage, insbesondere Kleinkläranlage oder kleine Kläranlage, zum Einbau zwischen das Festbett und die Belüftungseinrichtung der Abwasserreinigungskammer beschrieben. Die Abwasserzuführ/verteileinrichtung weist ein sich im eingebauten Zustand durch das Festbett erstreckendes Fallrohr und eine unter dem Fallrohr angeordnete Prallplatte, insbesondere einen am unteren Ende des Fallrohres angeordneten Verteilerkasten, auf, dessen Boden die Prallplatte zum Ablenken und Zerstäuben des durch das Fallrohr zugeführten Abwassers bildet und der mindestens eine seitliche Austrittsöffnung für das abgelenkte und zerstäubte Abwasser aufweist. Hierdurch läßt sich eine besonders wirkungsvolle Verteilung des zugeführten Abwassers erzielen.

## Beschreibung

Die vorliegende Erfindung betrifft eine Abwasserzuführ/verteileinrichtung für eine Abwasserreinigungskammer einer Kläranlage, insbesondere Kleinkläranlage oder kleine Kläranlage, die ein Festbett und eine unter dem Festbett angeordnete Belüftungseinrichtung aufweist, zum Einbau zwischen das Festbett und die Belüftungseinrichtung.

Eine derartige Abwasserzuführ/verteileinrichtung ist bereits in der älteren deutschen Patentanmeldung 196 45 269.4 vorgeschlagen worden. Speziell betrifft diese Patentanmeldung eine Kläranlage, bei der die Abwasserzuführung eine zwischen der Festbettunterseite und der Belüftungseinrichtung in die Abwasserreinigungskammer mündende Abgabeeinrichtung umfaßt.

In der älteren deutschen Patentanmeldung 196 45 267.8 ist bereits eine Einrichtung zur Lagerung eines Festbettes, einer Abwasserzuführeinrichtung und einer Belüftungseinrichtung innerhalb der Abwasserreinigungskammer einer Kläranlage vorgeschlagen worden, die ein eine Auflagevorrichtung für das Festbett bildendes Gestell, das Beine zur Abstützung auf dem Kammerboden und/oder an den Kammerwänden besitzt, einen am Gestell befestigten Verteilerkopf der Abwasserzuführeinrichtung und ein vom Verteilerkopf und/oder Gestell getragenes Luftzuführsystem der Belüftungseinrichtung, an dem eine oder mehrere Belüftungseinheiten fixiert sind, aufweist. Bei dieser Einrichtung erfolgt die Abwasserzuführung zu dem Verteilerkopf aus seitlicher Richtung. Wenn in der Abwasserreinigungskammer zwei Festbetten angerordnet sind, wird das Abwasser zwischen den Festbetten bis zu einer Stelle unterhalb der Festbettunterseite zugeführt und dann seitlich den unter den Festbetten angeordneten Verteilerköpfen zugeführt.

Der Erfindung liegt die Aufgabe zugrunde, eine Abwasserzuführ/verteileinrichtung der angegebenen Art zu schaffen, mit der mit einfachen Mitteln eine besonders wirkungsvolle Verteilung des Abwassers erzielt werden kann.

Diese Aufgabe wird erfindungsgemäß bei einer Abwasserzuführ/verteileinrichtung der angegebenen Art dadurch gelöst, daß sie ein sich im eingebauten Zustand durch das Festbett erstreckendes Fallrohr und eine unter dem Fallrohr angeordnete Prallplatte zum Ablenken und Zerstäuben des durch das Fallrohr zugeführten Abwassers aufweist.

Bei der erfindungsgemäßen Lösung findet somit keine seitliche Abwasserzuführung in den Verteilerkasten wie bei der vorstehend beschriebenen Lösung Anwendung, sondern eine Abwasserzuführung von oben. Das von oben in den Verteilerkasten eingeführte Abwasser trifft auf die Prallplatte. Hierdurch wird das Abwasser horizontal abgelenkt bzw. umgelenkt und zerstäubt. Das zerstäubte Abwasser wird in fein zerteilter Form in den Bereich der Abwasserreinigungskammer unterhalb des Festbettes abgegeben.

Diese Ausführungsform hat gegenüber der vorstehend beschriebenen Lösung den Vorteil, daß die Energie des durch das Fallrohr herabstürzenden Abwassers direkt zur Zerstäubung desselben ausgenutzt werden kann, so daß eine sehr feine Zerstäubung des Abwassers erreicht wird. Das auf die Prallplatte auftreffende Abwasser wird horizontal abgelenkt bzw. umgelenkt und in den entsprechenden Bereich der Abwasserreinigungskammer abgegeben. Durch die feine Zerstäubung wird das zugeführte Abwasser besonders gleichmäßig über die Unterseite des Festbettes verteilt und dem dort vorhandenen Abwasser zugemischt.

Bei einer besonders bevorzugten Ausführungsform der Erfindung weist die Abwasserzuführ/verteileinrichtung einen unter dem Fallrohr bzw. am unteren Ende des Fallrohres angeordneten Verteilerkasten auf, dessen Boden die Prallplatte zum Ablenken und Zerstäuben des durch das Fallrohr zugeführten Abwassers bildet und der mindestens eine seitliche Austrittsöffnung für das abgelenkte und zerstäubte Abwasser aufweist. Bei dieser Ausführungsform trifft das von oben in den Verteilerkasten eingeführte Abwasser auf den Boden des Verteilerkastens, der als Prallplatte wirkt. Hierdurch wird das Abwasser horizontal abgelenkt bzw. umgelenkt und zerstäubt, und zwar in Richtung auf die mindestens eine seitliche Austrittsöffnung. Das zerstäubte Abwasser tritt aus der Austrittsöffnung aus und wird in fein zerteilter Form in den Bereich der Abwasserreinigungskammer unterhalb des Festbettes abgegeben.

Der Verteilerkasten weist zweckmäßigerweise eine Vielzahl von um seinen Umfang verteilten Austrittsöffnungen auf, so daß das zugeführte Abwasser gleichmäßig um den Umfang des Verteilerkastens herum in die Abwasserreinigungskammer abgegeben werden kann. Der Verteilerkasten kann rund oder eckig ausgebildet sein. Bei einer speziellen Ausführungsform ist er mehreckig ausgebildet und weist an jeder Ecke eine Austrittsöffnung auf.

Um gleichmäßige Abgabebedingungen über die verschiedenen Austrittsöffnungen zu erreichen, ist der Abstand vom Fallrohr bis zu den Austrittsöffnungen im wesentlichen gleich. Hierdurch ergeben sich gleiche Anströmverhältnisse über den Umfang des Verteilerkastens.

Die erfindungsgemäß ausgebildete Abwasserzuführ/verteileinrichtung kann unabhängig von der Belüftungseinrichtung der Abwasserreinigungskammer ausgebildet sein. Beide Einrichtungen können voneinander völlig unabhängige Einheiten bilden, die getrennt montiert werden. Die Abwasserzuführ/verteileinrichtung kann jedoch auch mit der Belüftungseinrichtung eine Einheit bilden oder hieran befestigt sein. In einem derartigen Fall können beide Einrichtungen außerhalb der Abwasserreinigungskammer aneinander befestigt und dann als Einheit in der Abwasserreinigungskammer montiert werden. Beide Einrichtungen können jedoch auch als eine einzige Einheit ausgebildet sein, die dann in der Abwasserreinigungskammer montiert wird. Bei einer weiteren Ausführungsform stützt sich die Abwasserzuführ/verteileinrichtung auf der Belüftungseinrichtung ab und verhindert somit ein Aufschwimmen derselben.

Eine besonders bevorzugte Ausführungsform der Erfindung zeichnet sich dadurch aus, daß die mindestens eine seitliche Austrittsöffnung der Abwasserzuführ/verteileinrichtung auf eine Belüftungseinheit der Belüftungseinrichtung gerichtet ist. Bei dieser Ausführungsform wird somit das durch den Prallplatteneffekt zerstäubte Abwasser über die seitlichen Austrittsöffnungen gezielt entsprechenden Belüftungseinheiten der Belüftungseinrichtung zugeführt, so daß es durch die von den Belüftungseinheiten abgegebene Luft nach oben mitgerissen wird. Hierdurch wird eine besonders gute Belüftung und Durchströmung des darüber angeordneten Festbettes erreicht.

Bei der erfindungsgemäßen Lösung ist das Fallrohr mit Prallplatte oder Verteilerkasten freihängend in der Abwasserreinigungskammer montierbar. Es müssen daher keine speziellen Beine oder Halterungen vorgesehen sein. Das Fallrohr erstreckt sich hierbei durch das Festbett hindurch.

Wie bereits erwähnt, kann die Abwasserzuführ/verteileinrichtung dazu dienen, die darunter angeordnete Belüftungseinrichtung von oben zu halten und somit ein Aufschwimmen der Belüftungseinrichtung zu verhindern. Natürlich können auch entsprechende Befestigungsvorrichtungen angeordnet sein, um beide Einrichtungen miteinander zu verbinden, wie vorstehend ausgeführt.

Die Erfindung wird nachfolgend anhand eines Ausführungsbeispiels in Verbindung mit der Zeichnung im einzelnen erläutert. Es zeigen:
- Figur 1: eine perspektivische Ansicht einer Abwasserzuführ/verteileinrichtung mit darunter angeordneter Belüftungseinrichtung;
- Figur 2: eine Draufsicht auf die Abwasserzuführ/verteileinrichtung der Figur 1;
- Figur 3: eine Seitenansicht der Abwasserzuführ/verteileinrichtung der Figuren 1 und 2; und
- Figur 4: eine Draufsicht auf die in eine Abwasserreinigungskammer einer Kläranlage eingebaute Abwasserzuführ/verteileinrichtung.

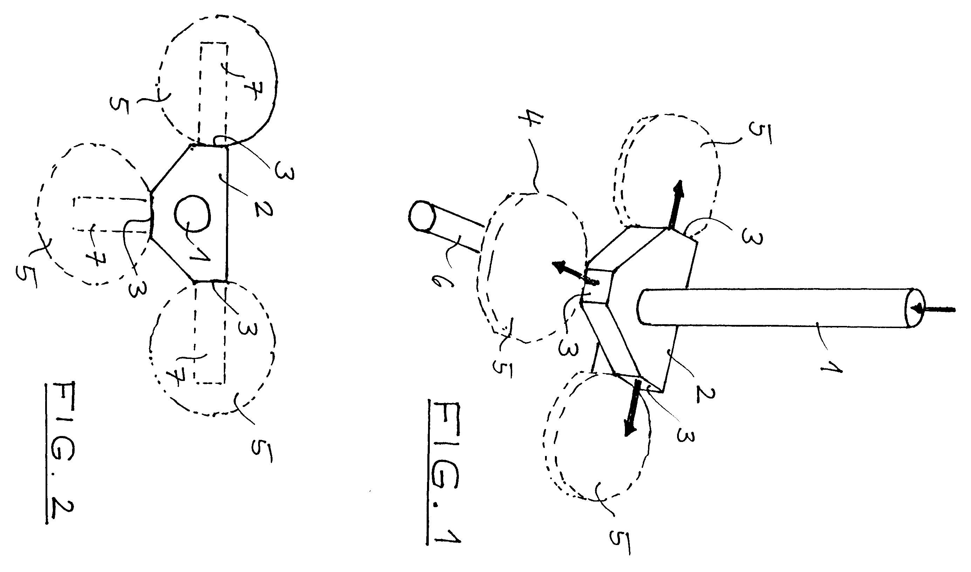

Die in Figur 1 in räumlicher Ansicht dargestellte Abwasserzuführ/verteileinrichtung besitzt ein Fallrohr 1, an dessen unterem Ende ein Verteilerkasten 2 angeordnet ist. Der Verteilerkasten 2 ist etwa dreieckförmig ausgebildet und besitzt an jeder Ecke eine Austrittsöffnung 3. Jede Austrittsöffnung mündet auf einen Belüftungsteller 5 einer drei Belüftungsteller aufweisenden Belüftungseinrichtung 4, die unterhalb des Verteilerkastens 2 angeordnet ist. Bei 6 ist ein Rohranschluß gezeigt, mittels dem Druckluft den einzelnen Belüftungstellern 5 der Belüftungseinrichtung zugeführt wird. Eine derartige Belüftungseinrichtung ist Stand der Technik und stellt als solche keinen Teil der vorliegenden Erfindung dar.

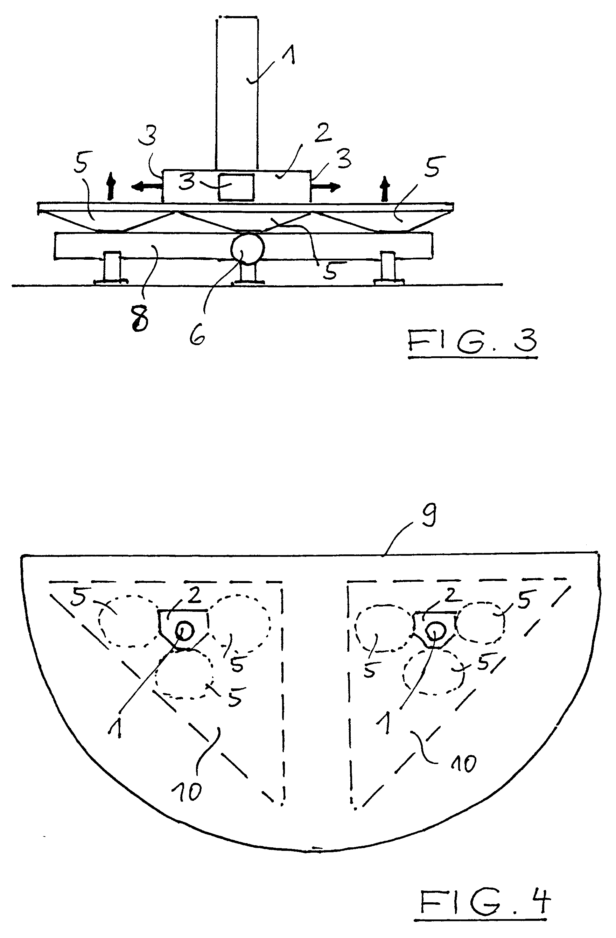

Die Figuren 2 und 3 zeigen die Abwasserzuführ/verteileinrichtung in der Draufsicht und in der Seitenansicht. Man erkennt, daß die seitlichen Austrittsöffnungen 3 des Verteilerkastens 2 jeweils auf einen Belüftungsteller 5 münden, der über ein Rohr 7 mit Druckluft versorgt wird. Der dreieckförmige Verteilerkasten 2 ist somit genau zwischen den Belüftungstellern 5 angeordnet.

Figur 3 zeigt, daß das Abwasser etwa horizontal über die Austrittsöffnungen 3 des Verteilerkastens auf die Belüftungsteller 5 abgegeben wird, die Druckluft nach oben führen. Die Belüftungseinrichtung weist ein geeignetes, mit Füßen versehenes Traggestell 8 auf.

Figur 4 zeigt eine schematische Draufsicht auf eine Abwasserreinigungskammer 9 einer Kläranlage. Die Kammer ist etwa halbkreisförmig ausgebildet und weist in ihrem Inneren zwei dreieckförmige Festbetten 10 auf, die nebeneinander angeordnet sind. Durch jedes Festbett erstreckt sich das Fallrohr 1 einer Abwasserzuführ/verteileinrichtung. Unterhalb des Festbettes befindet sich der Verteilerkasten 2 der Abwasserzuführ/verteileinrichtung und unterhalb desselben wiederum die Belüftungseinrichtung mit den drei Belüftungstellern 5.

Im Betrieb und im montierten Zustand in der Abwasserreinigungskammer funktioniert die Abwasserzuführ/verteileinrichtung wie folgt:

Über das Fallrohr 1 in die Abwasserreinigungskammer eingespeistes Abwasser trifft mit hoher Geschwindigkeit auf den Boden des Verteilerkastens 2, der als Prallplatte wirkt und das Abwasser zerstäubt und etwa in Horizontalrichtung umlenkt. Das zerstäubte Abwasser tritt aus den Austrittsöffnungen 3 aus und gelangt über die Belüftungsteller 5 der Belüftungseinrichtung. Durch die von den Belüftungstellern nach oben abgegebene Luft wird das fein verteilte Abwasser nach oben mitgerissen und durch das darüber befindliche Festbett geführt, das auf diese Weise besonders gut und wirkungsvoll belüftet und durchströmt wird.

Mit den vorstehend gewählten Begriffen "zerstäuben" oder "Zerstäubung" ist gemeint, daß der über das Fallrohr auf die Prallplatte treffende gerichtete Abwasserstrom je nach den vorherrschenden Druckbedingungen mehr oder weniger in Horizontalrichtung verteilt wird, d.h. der einheitliche Strom wird aufgelöst und mehr oder weniger in Einzelströme unterteilt. Die Erfindung schließt jedoch nicht aus, daß - insbesondere bei geringem Überdruck des zugeführten Abwassers - die Prallplatte eine reine Ablenkfunktion erfüllt, d.h. den Abwasserstrom aus dem Fallrohr als einheitlichen Strom ablenkt.

## Patentansprüche

1. Abwasserzuführ/verteileinrichtung für eine Abwasserreinigungskammer einer Kläranlage, insbesondere Kleinkläranlage oder kleine Kläranlage, die ein Festbett und eine unter dem Festbett angeordnete Belüftungseinrichtung aufweist, zum Einbau zwischen das Festbett und die Belüftungseinrichtung, dadurch gekennzeichnet, daß die Abwasserzuführ/verteileinrichtung ein sich im eingebauten Zustand durch das Festbett (10) erstreckendes Fallrohr (1) und eine unter dem Fallrohr (1) angeordnete Prallplatte zum Ablenken und Zerstäuben des durch das Fallrohr (1) zugeführten Abwassers aufweist.

2. Abwasserzuführ/verteileinrichtung nach Anspruch 1, dadurch gekennzeichnet, daß unter dem Fallrohr (1) ein Verteilerkasten (2) angeordnet ist, dessen Boden die Prallplatte zum Ablenken und Zerstäuben des durch das Fallrohr (1) zugeführten Abwassers bildet und der mindestens eine seitliche Austrittsöffnung (3) für das abgelenkte und zerstäubte Abwasser aufweist.

3. Abwasserzuführ/verteileinrichtung nach Anspruch 2, dadurch gekennezeichnet, daß der Verteilerkasten (2) eine Vielzahl von um seinen Umfang verteilten Austrittsöffnungen (3) aufweist.

4. Abwasserzuführ/verteileinrichtung nach Anspruch 2 oder 3, dadurch gekennzeichnet, daß der Verteilerkasten (2) mehreckig ausgebildet ist und an jeder Ecke eine Austrittsöffnung (3) aufweist.

5. Abwasserzuführ/verteileinrichtung nach einem der Ansprüche 2- 4, dadurch gekennzeichnet, daß die mindestens eine seitliche Austrittsöffnung (3) auf eine Belüftungseinheit (5) der Belüftungseinrichtung (4) gerichtet ist.

6. Abwasserzuführ/verteileinrichtung nach einem der Ansprüche 2 bis 5, dadurch gekennzeichnet, daß der Abstand vom Fallrohr (1) bis zu den Austrittsöffnungen (3) im wesentlichen gleich ist.

7. Abwasserzuführ/verteileinrichtung nach einem der vorangehenden Ansprüche, dadurch gekennzeichnet, daß sie mit der Belüftungseinrichtung (4) eine Einheit bildet oder hieran befestigt ist.

8. Abwasserzuführ/verteileinrichtung nach einem der vorangehenden Ansprüche, dadurch gekennzeichnet, daß das Fallrohr (1) mit Prallplatte oder Verteilerkasten (2) frei hängend montierbar ist.

9. Kläranlage mit einer Abwasserzuführ/verteileinrichtung nach einem der vorangehenden Ansprüche.
